# EUROPEAN PATENT APPLICATION

(11) **EP 4 636 892 A1**
(43) Date of publication of application: **22.10.2025**
(21) Application number: 23912592.5
(22) Date of filing: 22.11.2023
(51) Int. Cl.: H01M 10/0569, H01M 10/0568, H01M 10/052, H01M 10/058, H01M 50/40

(54) **ELECTROLYTE FOR LITHIUM SECONDARY BATTERY AND LITHIUM SECONDARY BATTERY COMPRISING SAME**

(30) Priority: 28.12.2022 KR 20220187866
(71) Applicant: SK On Co., Ltd., Seoul 03161 (KR)
(72) Inventor: PARK, Seong Jin, Daejeon 34124 (KR); PARK, Myung Soo, Daejeon 34124 (KR)
(74) Representative: Prüfer & Partner mbB Patentanwälte · Rechtsanwälte
(86) International application number: PCT/KR2023/018890
(87) International publication number: WO 2024/143916

(57) **Abstract**

An electrolyte for a lithium secondary battery of the embodiments of the present disclosure includes a fluorine-containing cyclic carbonate and a fluorine-containing linear asymmetric carbonate in a volume ratio of 1:9 to 8:2. Accordingly, the cycle life characteristics and high-voltage stability of a lithium secondary battery including the electrolyte may be improved.

## Description

### [Technical Field]

The present disclosure relates to an electrolyte for a lithium secondary battery and a lithium secondary battery including the same. More specifically, the present disclosure relates to an electrolyte for a lithium secondary battery, which includes different types of components, and a lithium secondary battery including the electrolyte.

### [Background Art]

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

For example, the lithium secondary battery may include: an electrode assembly including a cathode, an anode, and a separation membrane (separator); and an electrolyte in which the electrode assembly is impregnated. For example, When lithium metal is used as the anode, lithium may be unevenly deposited during charging of a lithium secondary battery, which may cause the growth of dendrites (crystal structures resembling tree branches), and the battery cycle life and stability may deteriorate.

Conventionally, lithium secondary batteries were charged at a voltage of 3.0 to 4.2 V, but research is being conducted to achieve higher energy capacity by applying a higher charging voltage (4.2 to 4.5 V). However, when a common non-aqueous carbonate solvent is used as an electrolyte, charging the battery at a voltage higher than 4.2 V may cause a decomposition reaction of the electrolyte, thereby resulting in deterioration in cycle life characteristics.

For example, Korean Patent Laid-Open Publication No. 10-2022-0082969 discloses an electrolyte including a fluorine-containing linear symmetric carbonate and a fluorine-containing cyclic carbonate. The electrolyte has high-voltage stability, but due to its low solubility, salts may be precipitated during long-term storage, and a stable solid electrolyte interphase (SEI) may not be formed on the anode surface, thereby resulting in poor battery performance.

### [Summary of Invention]

### [Problems to be Solved by Invention]

An object of the present disclosure is to provide an electrolyte capable of providing a lithium secondary battery with excellent high-voltage stability and cycle life characteristics.

Another object of the present disclosure is to provide a lithium secondary battery including the electrolyte and exhibiting excellent high-voltage stability and cycle life characteristics.

### [Means for Solving Problems]

An electrolyte for a lithium secondary battery according to exemplary embodiments includes: a fluorine-containing cyclic carbonate and a fluorine-containing linear asymmetric carbonate in a volume ratio of 1:9 to 8:2.

In some embodiments, the fluorine-containing linear asymmetric carbonate may be non-polymerizable.

In some embodiments, the fluorine-containing cyclic carbonate may have a structure represented by Formula 1 below:

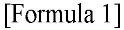

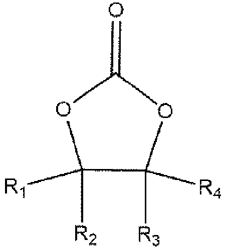

In Formula 1, R₁ to R₄ may each independently be a hydrogen atom or a fluorine atom, and at least one of R₁ to R₄ may be a fluorine atom.

In some embodiments, the fluorine-containing cyclic carbonate may include at least one selected from the group consisting of fluoroethylene carbonate (FEC), difluoroethylene carbonate (DFEC) and trifluoroethylene carbonate (TFEC).

In some embodiments, the fluorine-containing linear asymmetric carbonate may have a structure represented by Formula 2 below:

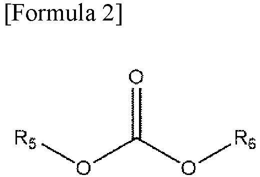

In Formula 2, R₅ may be a fluorine-free alkyl group having 1 to 5 carbon atoms, and R₆ may be an alkyl group having 1 to 5 carbon atoms in which at least one hydrogen atom is substituted with a fluorine atom.

In some embodiments, the fluorine-containing linear asymmetric carbonate may include at least one selected from the group consisting of fluorodimethyl carbonate (FDMC), fluorodiethyl carbonate (FDEC), and fluoroethylmethyl carbonate (FEMC).

In some embodiments, the content of the fluorine-containing cyclic carbonate and the fluorine-containing linear asymmetric carbonate may be 70% by weight or more based on the total weight of the electrolyte.

In some embodiments, the electrolyte may further include a lithium salt.

In some embodiments, the lithium salt may include at least one selected from the group consisting of LiPF₆, LiClO₄, LiBF₄, LiFSI, LiTFSI, LiSO₃CF₃, LiBOB, LiFOB, LiDFOB, LiDFBP, LiTFOP, LiPO₂F₂, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li, LiSCN and LiC(CF₃SO₂)₃.

In some embodiments, the fluorine content may be 30% by weight or more.

In some embodiments, the oxygen content may be 34% by weight or less.

A lithium secondary battery according to exemplary embodiments includes: a case; an electrode assembly including a cathode and an anode housed in the case; and the above-described electrolyte for a lithium secondary battery injected into the case.

In some embodiments, the anode may include metallic lithium or graphite.

In some embodiments, the electrode assembly may further include a separation membrane interposed between the cathode and the anode.

### [Advantageous effects]

According to exemplary embodiments of the present disclosure, the electrolyte for a lithium secondary battery may include a fluorine-containing cyclic carbonate and a fluorine-containing linear asymmetric carbonate in a volume ratio of 1:9 to 8:2. Accordingly, the high-voltage stability and cycle life characteristics of a lithium secondary battery including the electrolyte may be improved.

### [Brief Description of Drawings]

FIGS. 1 and 2 are schematic plan and cross-sectional views illustrating a lithium secondary battery according to exemplary embodiments, respectively.
FIGS. 3A and 3B are photographs illustrating the results of evaluating the electrodeposition shapes of lithium secondary batteries manufactured according to Example 1 and Comparative Example 1, respectively, wherein (A) in FIG. 3B illustrates electrodeposited lithium, and (B) in FIG. 3B illustrates a copper foil.
FIG. 4 is a graph illustrating the capacity retention rates (2.7 V to 4.3 V, at 80 cycles) during repeated charging and discharging of the lithium secondary batteries manufactured according to Example 1 and Comparative Examples 1 to 3.
FIG. 5 is a graph illustrating capacity retention rates (2.7 V to 4.5 V, at 55 cycles) during repeated charging and discharging of the lithium secondary batteries manufactured according to Example 1 and Comparative Examples 1 to 3.

### [Mode for Carrying out Invention]

Exemplary embodiments of the present disclosure provide an electrolyte for a lithium secondary battery including a fluorine-containing cyclic carbonate and a fluorine-containing linear asymmetric carbonate in a volume ratio of 1:9 to 8:2.

In addition, exemplary embodiments of the present disclosure provide a lithium secondary battery including the electrolyte for a lithium secondary battery.

Accordingly, the high-voltage stability and cycle life characteristics of the lithium secondary battery may be improved.

Hereinafter, embodiments of the present disclosure will be described in more detail. However, the following drawings attached to the present specification illustrate embodiments of the present disclosure, and serve to further understand the technical spirit of the present disclosure together with the above-described contents of the invention, such that the present disclosure should not be construed as being limited only to the illustrations of the drawings.

### <Electrolyte for a lithium secondary battery>

The electrolyte for a lithium secondary battery (hereinafter, also abbreviated as the electrolyte) according to exemplary embodiments may include a fluorine-containing cyclic carbonate and a fluorine-containing linear asymmetric carbonate in a volume ratio of 1:9 to 8:2.

When the lithium secondary battery is operated at a high voltage to achieve a high energy density, a film on the electrode surface may be decomposed, causing side reactions between the electrode and the electrolyte. Accordingly, the electrolyte may be decomposed, and decomposition products may accumulate on the electrode surface, thereby resulting in a reduction in ionic conductivity.

The electrolyte for a lithium secondary battery according to an embodiment may include a fluorine-containing carbonate solvent, such that the fluorine-containing carbonate solvent may form an SEI layer having a large number of LiF particles on the surface of a lithium metal electrode. Therefore, the SEI layer may act as a relatively stable film for electrochemical reactions, thereby suppressing electrolyte decomposition.

In addition, since the fluorine-containing carbonate solvent contains a large amount of fluorine, resistance to oxidative decomposition at high voltage may be improved. Therefore, the electrolyte may be used to provide a lithium secondary battery with improved high-voltage stability.

The electrolyte for a lithium secondary battery according to an embodiment may include a fluorine-containing cyclic carbonate and a fluorine-containing linear asymmetric carbonate within the above range, such that the electrolyte may contain a large amount of fluorine, thereby increasing oxidation stability and preventing decomposition even at high voltage. In addition, by forming a solid electrolyte interphase (SEI) (LiF rich layer) on the electrode surface to form a stable electrode-electrolyte interface, side reactions between the electrode and the electrolyte may be suppressed. Further, the growth of dendrites that cause a short circuit in the lithium metal battery may be suppressed. Therefore, by including the fluorine-containing cyclic carbonate and the fluorine-containing linear asymmetric carbonate within the above range, the electrolyte may be used to provide a lithium secondary battery with improved cycle life and capacity retention rate.

In some embodiments, the fluorine-containing cyclic carbonate may have a structure represented by Formula 1 below.

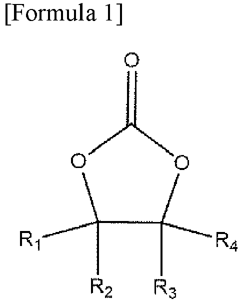

In Formula 1, R₁ to R₄ may each independently be a hydrogen atom or a fluorine atom, and at least one of R₁ to R₄ may be a fluorine atom.

For example, any one of R₁ to R₄ may be a fluorine atom, any two of R₁ to R₄ may be a fluorine atom, any three of R₁ to R₄ may be a fluorine atom, and all of R₁ to R₄ may be fluorine atoms.

In some embodiments, the fluorine-containing cyclic carbonate may include at least one selected from the group consisting of fluoroethylene carbonate (FEC), difluoroethylene carbonate (DFEC) and trifluoroethylene carbonate (TFEC).

In one embodiment, the fluorine-containing cyclic carbonate may include fluoroethylene carbonate (FEC).

In some embodiments, the fluorine-containing linear asymmetric carbonate may have a structure represented by Formula 2 below.

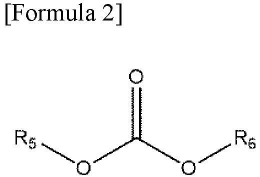

In Formula 2, R₅ may be a fluorine-free alkyl group having 1 to 5 carbon atoms, and R₆ may be an alkyl group having 1 to 5 carbon atoms in which at least one hydrogen atom is replaced with a fluorine atom.

For example, R₅ may be a fluorine-free alkyl group having 1 to 5 carbon atoms, a fluorine-free alkyl group having 1 to 4 carbon atoms, a fluorine-free alkyl group having 1 to 3 carbon atoms, a fluorine-free methyl group or ethyl group, or a fluorine-free methyl group.

For example, R₆ may be an alkyl group having 1 to 5 carbon atoms in which at least one hydrogen atom is replaced with a fluorine atom, an alkyl group having 1 to 4 carbon atoms in which at least one hydrogen atom is replaced with a fluorine atom, an alkyl group having 1 to 3 carbon atoms in which at least one hydrogen atom is replaced with a fluorine atom, a methyl group or an ethyl group in which at least one hydrogen atom is replaced with a fluorine atom, or a methyl group in which at least one hydrogen atom is replaced with a fluorine atom. Here, R₁₂ may be a perfluorinated alkyl group in which all hydrogen atoms are replaced with fluorine atoms.

In some embodiments, the fluorine-containing linear asymmetric carbonate may include at least one selected from the group consisting of fluorodimethyl carbonate (FDMC), fluorodiethyl carbonate (FDEC), and fluoroethylmethyl carbonate (FEMC).

The FDMC may refer to fluoromethyl methyl carbonate, the FDEC may refer to 2,2,2-trifluoroethyl carbonate, and the FEMC may refer to methyl (2,2,2-trifluoroethyl) carbonate (MTFEC).

In one embodiment, the fluorine-containing linear asymmetric carbonate may include fluoroethyl methyl carbonate (FEMC).

In some embodiments, the electrolyte may further include a lithium salt.

In some embodiments, the lithium salt may include at least one selected from the group consisting of LiPF₆, LiClO₄, LiBF₄, LiFSI, LiTFSI, LiSO₃CF₃, LiBOB, LiFOB, LiDFOB, LiDFBP, LiTFOP, LiPO₂F₂, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li, LiSCN and LiC(CF₃SO₂)₃.

In one embodiment, the lithium salt may include LiPF₆.

A concentration of the lithium salt dissolved in the solvent may be 0.5 M to 3 M. For example, the concentration of the lithium salt may be 0.5 M to 3 M, 0.8 M to 1.5 M, or 0.8 M to 1.2 M. Within the above range, the migration of lithium ions and/or electrons may be further facilitated.

In some embodiments, the fluorine-containing linear asymmetric carbonate may be non-polymerizable. Accordingly, the electrolyte may have more sufficient solubility for the lithium salt, and the lithium salt may not precipitate even during long-term storage.

When a fluorine-containing linear symmetric carbonate and a fluorine-containing cyclic carbonate are used, the lithium salt may not be sufficiently dissolved. Accordingly, the lithium salt may remain in the form of a salt, which may increase resistance, cause side reactions, and cause delamination and polarization of the electrode. As a result, the output and cycle life characteristics of the lithium secondary battery may deteriorate.

However, when using a fluorine-containing linear asymmetric carbonate and a fluorine-containing cyclic carbonate, the lithium salt may be uniformly dissolved. Therefore, since the lithium salt does not remain in the form of a salt and lithium ions are evenly distributed in the electrolyte, and a uniform protective layer is formed on the electrode, the capacity retention rate of the lithium secondary battery may be improved.

In some embodiments, contents of the fluorine-containing cyclic carbonate and the fluorine-containing linear asymmetric carbonate may be 70% by weight ("wt%") or more based on the total weight of the electrolyte. For example, the content of the fluorine-based solvent may be 70 to 98 wt%, 75 to 95 wt%, or 80 to 90 wt% or more.

Within the above range, the fluorine atom content included in the electrolyte may be appropriately adjusted, thereby allowing an SEI layer to be more sufficiently formed on the surface of the lithium metal electrode and further suppressing the formation of dendrites. Accordingly, the high-voltage stability and cycle life characteristics of the lithium secondary battery may be further improved.

In some embodiments, the electrolyte may have a fluorine content of 30 wt% or more. For example, the fluorine content may be 30 to 44 wt%, 32 to 40 wt%, or 35 to 38 wt%.

Within the above range, an SEI layer having a plurality of LiF particles may be formed on the surface of the lithium metal electrode, thereby suppressing the formation of dendrites and further suppressing electrolyte decomposition under high voltage. Accordingly, the high-voltage stability and cycle life characteristics of the lithium secondary battery may be further improved.

In some embodiments, the electrolyte may have an oxygen content of 34 wt% or less. For example, the oxygen content may be 24 to 34 wt%, 27 to 32 wt%, or 29 to 30 wt%. Within the above range, the cycle life and capacity retention rate of the lithium secondary battery may be further improved.

For example, the content of each element constituting the electrolyte may be comprehensively measured using an Elemental Analyzer (EA), Inductively Coupled Plasma-Optical Emission Spectroscopy (ICP-OES), Ion Chromatography (IC), and Nuclear Magnetic Resonance (NMR).

In some embodiments, the electrolyte may be a non-aqueous electrolyte that does not contain water.

### <Lithium secondary battery>

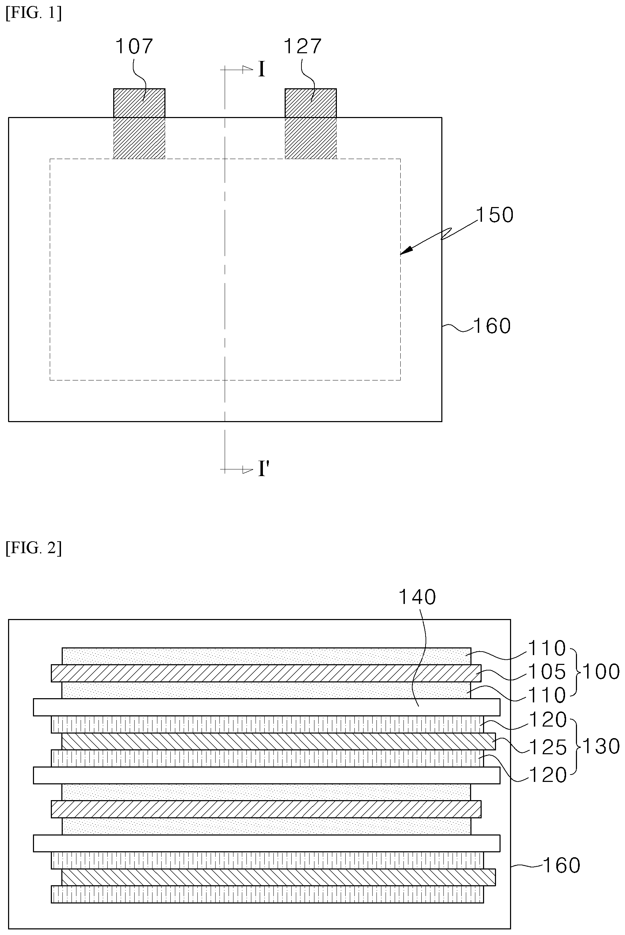

FIGS. 1 and 2 are a plan view and a cross-sectional view schematically illustrating a lithium secondary battery according to exemplary embodiments, respectively.

Referring to FIGS. 1 and 2, the lithium secondary battery may include an electrode assembly 150 including a cathode 100 and an anode 130. The electrode assembly 150 may be housed in a case 160 together with the above-described electrolyte according to the exemplary embodiments to be impregnated. The electrode assembly 150 may further include a separation membrane 140 interposed between the cathode 100 and the anode 130.

The cathode 100 may include a cathode active material layer 110 formed by applying a cathode active material to a cathode current collector 105. The cathode active material may include a compound capable of reversibly intercalating and deintercalating lithium ions.

In some embodiments, the cathode active material may be a secondary particle formed by assembling or aggregating a plurality of primary particles into substantially one particle, or may be in the form of a single particle. The single particle form may refer to, for example, excluding a secondary particle formed by assembling or aggregating a plurality of (e.g., greater than 10) primary particles into substantially one particle. However, the single particle form does not exclude a monolithic body form formed by attaching or closely contacting single particles in a range of 2 to 10 (e.g., a structure converted into a single particle). In some embodiments, the cathode active material may include both the secondary particle form and the single particle form.

In exemplary embodiments, the cathode active material may include a lithium-transition metal oxide. For example, the cathode active material may include a lithium-transition metal oxide such as a lithium cobalt oxide (LiCoO₂), lithium manganese oxide (LiMn₂O₄), lithium nickel oxide (LiNiO₂), and lithium iron phosphate (LFP)-based cathode active materials, etc., or a lithium-transition metal composite oxide in which some of these transition metals are substituted by another transition metal.

For example, the lithium-transition metal oxide may include nickel (Ni), and may further include at least one selected from the group consisting of cobalt (Co) and manganese (Mn). For example, the cathode active material may include an NCM-based cathode active material; Mn-rich-based cathode active material; or Li-rich layered oxide (LLO), over-lithiated oxide (OLO) or over-lithiated layered oxide (OLLO)-based cathode active material.

For example, the lithium-transition metal oxide may have a structure represented by Formulas 3-1 to 3-3 below.

[Formula 3-1] LiₐNi_{b}M_{1-b}O₂

In Formula 3-1 above, a and b may satisfy 0.9≤a≤1.2, b≥0.5, and M may be at least one of Na, Mg, Ca, Y, Ti, Zr, Hf, V, Nb, Ta, Cr, Mo, W, Mn, Co, Fe, Cu, Ag, Zn, B, Al, Ga, C, Si, Sn and Ba. Specifically, in Formula 3-1 above, a may be in a range of 0.95≤a≤1.08, and b may be 0.6 or more, 0.8 or more, greater than 0.8, 0.9 or more, or 0.98 or more. Specifically, in Formula 3-1 above, M may include Co, Mn or Al, and more specifically, M may include Co and Mn and optionally further include Al.

[Formula 3-2] pLi₂MnO₃·(1-p)LiqJO₂

In Formula 3-2 above, p and q may satisfy 0<p<1, 0.9≤q≤1.2, and J may be one or more elements selected from the group consisting of Mn, Ni, Co, Fe, Cr, V, Cu, Zn, Ti, Al, Mg, and B.

[Formula 3-3] Li₁₊ₓM₁₋ₓO₂

In Formula 3-3 above, x may be in a range of 0≤x≤0.4, and M may be at least one of Na, Mg, Ca, Y, Ti, Zr, Hf, V, Nb, Ta, Cr, Mo, W, Ni, Mn, Co, Fe, Cu, Ag, Zn, B, Al, Ga, C, Si, Sn, Ba and Zr. Specifically, in Formula 3-3 above, M may include Ni, Co, Mn or Al, and more specifically, may include Ni, Co and Mn, and optionally further include Al.

In addition, the cathode active material may be a lithium iron phosphate (LFP)-based cathode active material represented by a formula of LiFePO₄.

A slurry may be prepared by mixing and stirring the cathode active material with a binder, a conductive material and/or a dispersant in a solvent. The slurry may be applied to the cathode current collector 105, followed by compression and drying to prepare the cathode 100.

The cathode current collector 105 may include, for example, stainless steel, nickel, aluminum, titanium, copper, or an alloy thereof, or may include aluminum or an aluminum alloy.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC). For example, a PPC-LiTFSI-based binder may be used as a cathode binder.

The conductive material may be included to facilitate the migration of electrons between active material particles. For example, the conductive material may include carbon-based conductive materials such as graphite, carbon black, graphene, or carbon nanotubes and/or metal-based conductive materials, including perovskite materials, such as tin, tin oxide, titanium oxide, LaSrCoO₃, and LaSrMnO₃.

The anode 130 may include an anode current collector 125 and an anode active material layer 120 formed by coating the anode current collector 125 with an anode active material.

The anode current collector 125 may include, for example, gold, stainless steel, nickel, aluminum, titanium, copper, or an alloy thereof, and may include, for example, copper or a copper alloy.

In some embodiments, as the anode active material, a carbon-based compound such as artificial graphite, natural graphite, or amorphous carbon or a silicon (Si)-based compound may be used. For example, as the anode active material, silicon-carbon particles including pure Si, silicon oxide (SiOx; 0<x<2), silicon carbide (SiC), or a carbon core and a silicon coating layer may be used.

In some embodiments, the anode 130 may include metallic lithium or graphite. For example, as the anode active material, metallic lithium or a lithium-metal alloy may be used, and the anode active material layer 120 may include a lithium metal foil disposed on the anode current collector 125. For example, the anode 130 may include one or more graphite of the artificial graphite and natural graphite.

In some embodiments, a slurry may be prepared by mixing and stirring the anode active material with a binder, a conductive material and/or a dispersant in a solvent. The slurry may be applied to the anode current collector 125, followed by compression and drying to prepare the anode 130. As the conductive material, materials substantially the same as or similar to the above-described materials may be used.

In exemplary embodiments, a binder for an anode may include: an organic binder such as vinylidene fluoride-hexafluoropropylene copolymer (PVDF-HFP), polyvinylidene fluoride (PVDF), polyacrylonitrile, polymethyl methacrylate, PPC-LiTFSI, etc.; or an aqueous binder such as SBR, etc., and may be used together with a thickener such as CMC.

Meanwhile, the lithium secondary battery may be an anodeless secondary battery. That is, the lithium secondary battery may be a battery in which the anode active material layer 120 is not formed on the anode current collector 125 during a process of assembling the battery. When the anodeless lithium secondary battery is initially charged or first charged, a main cathode active material and a sacrificial cathode active material may be delithiated, and lithium ions generated from the cathode active material may be reduced on the anode current collector 125 to form a lithium layer of a lithium metal layer or a solid lithium layer.

A separation membrane 140 may be interposed between the cathode 100 and the anode 130. The separation membrane 140 may include a porous polymer film made of a polyolefin-based polymer such as ethylene homopolymer, propylene homopolymer, ethylene/butene copolymer, ethylene/hexene copolymer, ethylene/methacrylate copolymer or the like. The separation membrane may include a nonwoven fabric made of glass fibers having a high melting point, polyethylene terephthalate fibers, etc.

In some embodiments, the anode 130 may have an area (e.g., a contact area with the separation membrane 140) and/or volume larger than those/that of the cathode 100. Thereby, lithium ions generated from the cathode 100 may smoothly migrate to the anode 130 without being precipitated during the process, for example.

According to exemplary embodiments, an electrode cell is defined by the cathode 100, the anode 130 and the separation membrane 140, and a plurality of electrode cells are stacked to form, for example, a jelly roll-type electrode assembly 150. For example, the electrode assembly 150 may be formed by winding, laminating, folding, and the like the separation membrane 140.

The electrode assembly 150 may be housed in a case 160 together with the electrolyte according to exemplary embodiments, such that a lithium secondary battery may be defined.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) that extend or are exposed to the outside of the case 160.

The lithium secondary battery may be manufactured, for example, in a cylindrical shape using a can, a prismatic shape, a pouch shape or a coin shape.

Hereinafter, preferred examples are proposed to facilitate understanding of the present disclosure. However, the following examples are only given for illustrating the present disclosure and those skilled in the art will obviously understand that various alterations and modifications are possible within the scope and spirit of the present disclosure. Such alterations and modifications are duly included in the appended claims.

### Examples and Comparative Examples

### 1. Example 1

### (1) Preparation of electrolyte

FEC (manufactured by Tokyo Chemical Industry) and FEMC (manufactured by Synquest Labs) were mixed in a volume ratio of 1:4, and stirred for 12 hours to prepare a mixed solvent. Then, 1 M LiPF₆ was dissolved in the mixed solvent, and the mixture was stirred for 12 hours to prepare an electrolyte.

### (2) Manufacture of lithium secondary battery

A slurry was prepared by mixing Li[Ni_{0.6}Co_{0.2}Mn_{0.2}]O₂ as a cathode active material, carbon black as a conductive material, and polyvinylidene fluoride (PVdF) as a binder in a weight ratio of 92:5:3. The slurry was uniformly applied to an aluminum foil having a thickness of 15 µm and vacuum dried at 130°C. The dried slurry was rolled to manufacture a cathode for a lithium secondary battery with a density of 3.667 g/cm³.

A lithium metal foil (thickness: 20 µm) (manufactured by Honzo) was used as an anode.

An electrode assembly was formed by interposing a separation membrane (polypropylene) between the prepared cathode and anode. The electrode assembly was placed in a case with the electrolyte prepared in (1) above, and vacuum-packed to manufacture a lithium secondary battery.

### 2. Comparative Example 1

Organic solvents EC (ethylene carbonate) (manufactured by Enchem) and EMC (ethyl methyl carbonate) (manufactured by Enchem) were mixed in a volume ratio of 3:7, respectively, and stirred for 12 hours to prepare a mixed solvent. Then, 1M LiPF6 was dissolved in the mixed solvent, and FEC was added, then the mixture was stirred for 12 hours to prepare an electrolyte. Thereafter, a lithium secondary battery was manufactured in the same manner as in Example 1, except that the above-prepared electrolyte was used instead of the electrolyte of Example 1.

### 3. Comparative Example 2

An electrolyte was prepared in the same manner as in Example 1, except that fluorine-containing linear symmetric carbonates, FEC and DFDEC (bis(2,2,2-trifluoroethyl) carbonate) (manufactured by Tokyo Chemical Industry) were mixed in a volume ratio of 1:4, without using FEMC, a fluorine-containing linear asymmetric carbonate. Thereafter, a lithium secondary battery was manufactured in the same manner as in Example 1, except that the above-prepared electrolyte was used instead of the electrolyte of Example 1.

### 4. Comparative Example 3

An electrolyte was prepared in the same manner as in Comparative Example 2, except that 1.5 M LiPF₆ was used instead of 1 M LiPF₆. Thereafter, a lithium secondary battery was manufactured in the same manner as in Example 1, except that the above-prepared electrolyte was used instead of the electrolyte of Example 1.

### 5. Comparative Example 4

An electrolyte was prepared in the same manner as in Example 1, except that fluorine-based solvents, FEC and FEMC, were mixed in a volume ratio of 0.8:9.2. Thereafter, a lithium secondary battery was manufactured in the same manner as in Example 1, except that the above-prepared electrolyte was used instead of the electrolyte of Example 1.

### 6. Comparative Example 5

An electrolyte was prepared in the same manner as in Example 1, except that fluorine-based solvents, FEC and FEMC, were mixed in a volume ratio of 8.2:1.8. Thereafter, a lithium secondary battery was manufactured in the same manner as in Example 1, except that the above-prepared electrolyte was used instead of the electrolyte of Example 1.

In the examples and comparative examples, the volume ratios (v/v) of the solvents are described in Table 1 below, and the contents (wt%) of the solvents and lithium salts based on the total weight of the electrolyte are described in Table 2 below. The contents of fluorine, phosphorus, oxygen, carbon, and hydrogen included in the electrolyte are described in Table 3.

**[TABLE 1]**

| | Volume ratio of solvents (v/v) |
|---|---|
| Example 1 | FEC:FEMC=1:4 |
| Comparative Example 1 | EC:EMC=3:7 |
| Comparative Example 2 | FEC:DFDEC=1:4 |
| Comparative Example 3 | FEC:DFDEC=1:4 |
| Comparative Example 4 | FEC:FEMC=0.8:9.2 |
| Comparative Example 5 | FEC:FEMC=8.2:1.8 |

**[TABLE 2]**

| | Lithium salt | Solvent |
|---|---|---|
| Example 1 | LiPF₆ (11.0 wt%) | FEC (19.0 wt%) and FEMC (70.0 wt%) |
| Comparative Example 1 | LiPF₆ (13.0 wt%) | EC (30.5 wt%), EMC (54.5 wt%), and FEC (2 wt%) |
| Comparative Example 2 | LiPF₆ (10.1 wt%) | FEC (17.4 wt%) and DFDEC (72.4 wt%) |
| Comparative Example 3 | LiPF₆ (15.3 wt%) | FEC (16.4 wt%) and DFDEC (68.3 wt%) |
| Comparative Example 4 | LiPF₆ (11.1 wt%) | FEC (9.6 wt%) and FEMC (79.3 wt%) |
| Comparative Example 5 | LiPF₆ (10.6 wt%) | FEC (72.7 wt%) and FEMC (16.7 wt%) |

**[TABLE 3]**

| | Fluorine content (wt%) | Phosphorus content (wt%) | Oxygen content (wt%) | Carbon content (wt%) | Hydrogen content (wt%) |
|---|---|---|---|---|---|
| Example 1 | 37.1 | 2.3 | 30.0 | 27.8 | 2.8 |
| Comparative Example 1 | 10.2 | 2.7 | 42.9 | 38.5 | 5.7 |
| Comparative Example 2 | 47.5 | 2.1 | 23.3 | 25.3 | 1.8 |
| Comparative Example 3 | 49.1 | 3.1 | 22.2 | 23.9 | 1.7 |
| Comparative Example 4 | 38.8 | 2.3 | 28.6 | 27.5 | 2.8 |
| Comparative Example 5 | 27.1 | 2.2 | 38.2 | 29.9 | 2.6 |

### Evaluation

### Evaluation 1: Evaluation of lithium electrodeposition

The lithium secondary batteries according to the examples and comparative examples were charged at a constant current of 0.1 C to 4.3 V at room temperature (25°C), and then charged at a constant voltage until the current reached 0.01 C while maintaining 4.3 V. Thereafter, the shape of the lithium electrodeposited on the surface of the copper foil was evaluated using a scanning electron microscope (SEM).

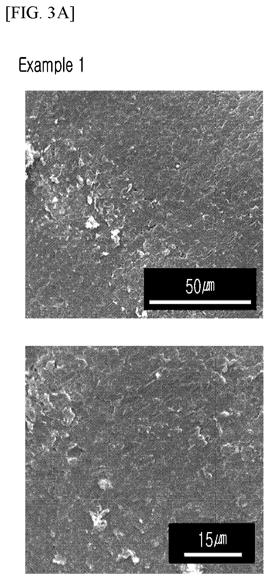

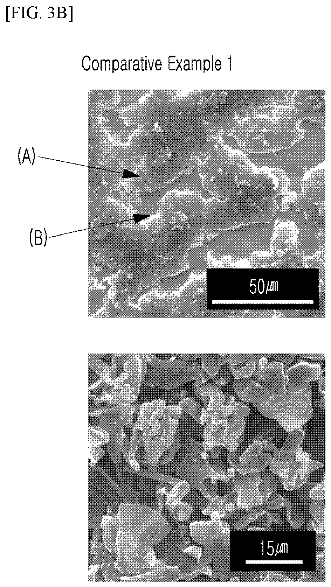

FIGS. 3A and 3B are photographs illustrating the results of evaluating the electrodeposition shapes of lithium secondary batteries manufactured according to Example 1 and Comparative Example 1, respectively, wherein (A) in FIG. 3B illustrates the electrodeposited lithium and (B) in FIG. 3B illustrates the copper foil.

Referring to FIGS. 3A and 3B, in Example 1, lithium was densely deposited on the surface of the copper foil and the formation of dendrites was suppressed, whereas in Comparative Example 1, lithium was unevenly deposited on the surface of the copper foil and the growth of dendrites was not suppressed.

The evaluation results are shown in Table 4 below.

### Evaluation 2: Evaluation of general voltage cycle life

The lithium secondary batteries according to the examples and comparative examples were charged at a constant current of 0.5 C to 4.3 V at room temperature (25°C), and then charged at a constant voltage until the current reached 0.05 C while maintaining 4.3 V. Thereafter, the initial discharge capacity was measured by discharging at 0.5 C to 2.7 V.

The charging and discharging were repeated 80 times, and the discharge capacity in each cycle was divided by the initial capacity to calculate the capacity retention rate (%).

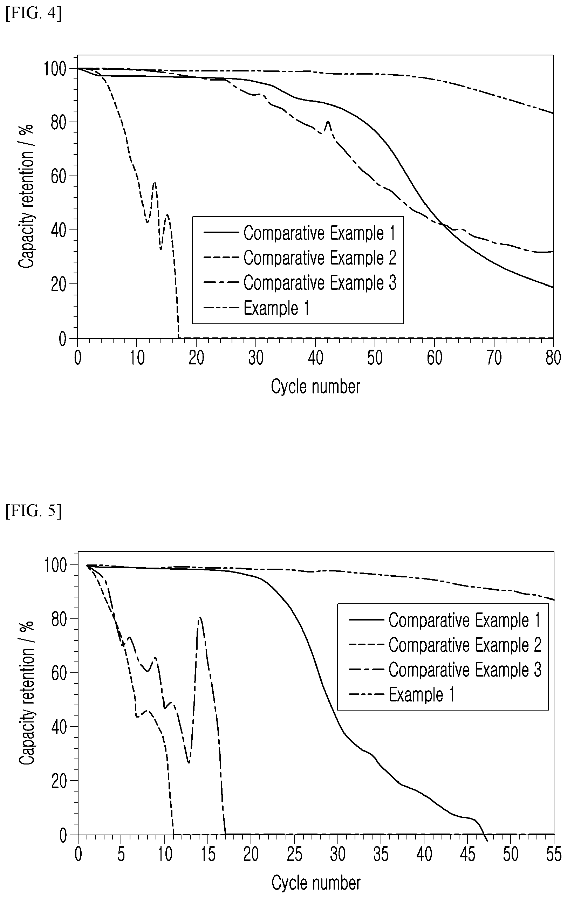

FIG. 4 is a graph illustrating the capacity retention rates (2.7 V to 4.3 V, at 80 cycles) during repeated charging and discharging of the lithium secondary batteries manufactured according to Example 1 and Comparative Examples 1 to 3.

Referring to FIG. 4, the capacity retention rate of Example 1 partially decreased after 60 cycles, whereas the capacity retention rates of Comparative Examples 1 and 3 rapidly decreased after 30 cycles, and the capacity retention rate of Comparative Example 2 rapidly decreased from the beginning of repeated charging and discharging and dropped to 0% after 18 cycles.

The results of evaluating the capacity retention rate at 80 cycles are shown in Table 4 below.

### Evaluation 3: Evaluation of high-voltage cycle life

The lithium secondary batteries according to the examples and comparative examples were charged at a constant current of 0.5 C to 4.5 V at room temperature (25°C), and then charged at a constant voltage until the current reached 0.05 C while maintaining 4.5 V. Thereafter, the initial discharge capacity was measured by discharging at 0.5 C to 2.7 V.

The charging and discharging were repeated 55 times, and the discharge capacity in each cycle was divided by the initial capacity to calculate the capacity retention rate (%).

FIG. 5 is a graph illustrating the capacity retention rates (2.7 V to 4.5 V, at 55 cycles) during repeated charging and discharging for lithium secondary batteries manufactured according to Example 1 and Comparative Examples 1 to 3.

Referring to FIG. 5, the capacity retention rate of Example 1 partially decreased after 30 cycles, whereas the capacity retention rate of Comparative Example 1 rapidly decreased after 22 cycles, and the capacity retention rates of Comparative Examples 2 and 3 rapidly decreased from the beginning of repeated charging and discharging and dropped to 0% after 11 and 17 cycles, respectively.

The results of evaluating the capacity retention rate at 55 cycles are shown in Table 4 below.

**[TABLE 4]**

| | Whether dendrite formation is suppressed | Capacity retention ratio (%) (2.7V to 4.3V, @80 cycles) | Capacity retention ratio (%) (2.7V to 4.5V, @55 cycles) |
|---|---|---|---|
| Example 1 | ○ | 84 | 84 |
| Comparative Example 1 | × | 20 | 0 |
| Comparative Example 2 | × | 0 | 0 |
| Comparative Example 3 | × | 32 | 0 |
| Comparative Example 4 | ○ | 58 | 61 |
| Comparative Example 5 | ○ | 41 | 45 |

Referring to Tables 3 and 4, the electrolyte of Example 1, which included a fluorine-containing cyclic carbonate and a fluorine-containing linear asymmetric carbonate in a predetermined volume ratio, had a fluorine content of 30 wt% or more, and exhibited improved dendrite suppression ability and capacity retention rate at normal voltage and high voltage.

In Comparative Example 1, which mainly used a mixed solvent of EC/EMC although FEC was added, both the dendrite suppression ability and the capacity retention rate were deteriorated at normal voltage and high voltage.

In Comparative Examples 2 and 3, which included a fluorine-containing cyclic carbonate and a fluorine-containing linear symmetric carbonate, both the dendrite suppression ability and the capacity retention rate were deteriorated at normal voltage and high voltage.

In Comparative Examples 4 and 5, in which the volume ratio of the fluorine-containing cyclic carbonate and the fluorine-containing linear asymmetric carbonate was out of a specific range, capacity retention was improved at normal voltage and high voltage than Comparative Example 1, but deteriorated compared to Example 1.

Therefore, it can be seen that the electrolyte of Example 1, which satisfies a predetermined composition, may be used to provide a lithium secondary battery with improved high-voltage stability and cycle life characteristics.

## Claims

1. An electrolyte for a lithium secondary battery comprising:
a fluorine-containing cyclic carbonate and a fluorine-containing linear asymmetric carbonate in a volume ratio of 1:9 to 8:2.

2. The electrolyte for a lithium secondary battery according to claim 1, wherein the fluorine-containing linear asymmetric carbonate is non-polymerizable.

3. The electrolyte for a lithium secondary battery according to claim 1, wherein the fluorine-containing cyclic carbonate has a structure represented by Formula 1 below: 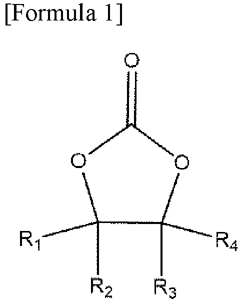 (in Formula 1, R₁ to R₄ are each independently a hydrogen atom or a fluorine atom, and at least one of R₁ to R₄ is a fluorine atom).

4. The electrolyte for a lithium secondary battery according to claim 1, wherein the fluorine-containing cyclic carbonate comprises at least one selected from the group consisting of fluoroethylene carbonate (FEC), difluoroethylene carbonate (DFEC) and trifluoroethylene carbonate (TFEC).

5. The electrolyte for a lithium secondary battery according to claim 1, wherein the fluorine-containing linear asymmetric carbonate has a structure represented by Formula 2 below: 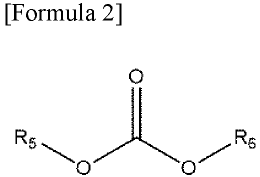 (in Formula 2, R₅ is a fluorine-free alkyl group having 1 to 5 carbon atoms, and R₆ is an alkyl group having 1 to 5 carbon atoms in which at least one hydrogen atom is substituted with a fluorine atom).

6. The electrolyte for a lithium secondary battery according to claim 1, wherein the fluorine-containing linear asymmetric carbonate comprises at least one selected from the group consisting of fluorodimethyl carbonate (FDMC), fluorodiethyl carbonate (FDEC), and fluoroethylmethyl carbonate (FEMC).

7. The electrolyte for a lithium secondary battery according to claim 1, wherein the content of the fluorine-containing cyclic carbonate and the fluorine-containing linear asymmetric carbonate is 70% by weight or more based on the total weight of the electrolyte.

8. The electrolyte for a lithium secondary battery according to claim 1, wherein the electrolyte further comprises a lithium salt.

9. The electrolyte for a lithium secondary battery according to claim 8, wherein the lithium salt comprises at least one selected from the group consisting of LiPF₆, LiClO₄, LiBF₄, LiFSI, LiTFSI, LiSO₃CF₃, LiBOB, LiFOB, LiDFOB, LiDFBP, LiTFOP, LiPO₂F₂, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li, LiSCN and LiC(CF₃SO₂)₃.

10. The electrolyte for a lithium secondary battery according to claim 1, wherein the fluorine content is 30% by weight or more.

11. The electrolyte for a lithium secondary battery according to claim 1, wherein the oxygen content is 34% by weight or less.

12. A lithium secondary battery comprising:
a case;
an electrode assembly including a cathode and an anode housed in the case; and
the electrolyte for a lithium secondary battery according to any one of claims 1 to 11 injected into the case.

13. The lithium secondary battery according to claim 12, wherein the anode includes metallic lithium or graphite.

14. The lithium secondary battery according to claim 12, wherein the electrode assembly further includes a separation membrane interposed between the cathode and the anode.
